(19) Europäisches Patentamt
European Patent Office
Office européen des brevets

(11) EP 2 129 101 A2

(12) **EUROPEAN PATENT APPLICATION**

(43) Date of publication:
**02.12.2009 Bulletin 2009/49**

(51) Int Cl.:
**H04N 1/407** (2006.01)

(21) Application number: **09159265.9**

(22) Date of filing: **01.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.05.2008 JP 2008139160**

(71) Applicant: **Konica Minolta Business Technologies, INC.**
**Tokyo 100-0005 (JP)**

(72) Inventor: **Yasunaga, Yutaka**
**Tokyo, Tokyo 100-0005 (JP)**

(74) Representative: **Higgs, Jonathan**
**Urquhart-Dykes & Lord LLP**
**30 Welbeck Street**
**London W1G 8ER (GB)**

Remarks:
A request for correction of the drawings has been filed pursuant to Rule 139 EPC. A decision on the request will be taken during the proceedings before the Examining Division (Guidelines for Examination in the EPO, A-V, 3.).

(54) **Image forming apparatus and density correcting method**

(57) An image forming apparatus, comprises: a control unit for causing an image for correction to be generated, the image including (i) a beltlike image having a predetermined density and extending in a main scanning direction and (ii) auxiliary lines arranged in different correction reference positions on the beltlike image in the main scanning direction, and each auxiliary line extending in a sub-scanning direction; an image forming unit for forming the image for correction on a paper to output a correction chart; an operation unit for accepting an input for a correction value of a pixel density in the correction reference position based on the correction chart; and a correction unit for correcting each pixel density of an image to be formed based on a result obtained by executing a linear interpolation process for pixel densities between the correction reference positions based on the correction value.

## FIG.1

EP 2 129 101 A2

**Description**

BACKGROUND OF THE INVENTION

1. Field of the Invention

The present invention relates to an image forming apparatus and a density correcting method.

2. Description of Related Art

In general, image forming apparatuses, such as a copying machine and a printer, have a density adjusting function.

In the image forming apparatus, output density is likely to vary due to mechanical factors, such as a variation in the state of the apparatus over time, the mounting position of an optical write device, such as a laser unit, the length of an optical passage, the distortion of a lens, the charged state of a drum, and the state of an intermediate transfer unit, or a change in surrounding environment.

For example, Japanese Patent Application Laid-Open (JP-A) No. 2005-24733 discloses a common density adjusting function. JP-A No. 2005-24733 discloses an image forming apparatus including an image density correction apparatus that uses a gamma curve to correct the density of an output image.

The image forming apparatus divides a print region of paper into a plurality of print regions, performs printing on a sheet for density adjustment so that the printed sheet has each divided print region where patches having a plurality of densities within a predetermined range and a patch having the same density are arranged, reads the densities of the sheet for density adjustment together with the positional information of each of the patches, calculates the average value of the read densities of the patches having the same density, and calculates a gamma curve from the average value.

The image forming apparatus disclosed in JP-A No. 2005-24733 corrects the density of the entire image, but does not correct density unevenness in the main scanning direction in order to obtain uniform density in the main scanning direction. In addition, in the image forming apparatus, the user cannot check the position where an error occurs in the main scanning direction and the position of a pixel to be corrected.

In addition, the user cannot perform the density unevenness correction, but only a maintenance expert of the image forming apparatus can adjust the density unevenness correction in the main scanning direction. Therefore, user convenience is lowered.

SUMMARY OF THE INVENTION

It is, therefore, a main object of the present invention to provide evenness of density in a main scanning direction. To achieve at least one of the aforementioned objects or other objects, an image forming apparatus reflecting one aspect of the present invention, comprises:

a control unit for causing an image for correction to be generated, the image including (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction;
an image forming unit for forming the image for correction generated by the control unit on a paper to output a correction chart;
an operation unit for accepting an input for a correction value of a pixel density in the correction reference position based on the correction chart; and
a correction unit for correcting each pixel density of an image to be formed based on a result obtained by executing a linear interpolation process for pixel densities between the correction reference positions based on the correction value input by the operation unit.

BRIEF DESCRIPTION OF THE DRAWINGS

The above and other objects, advantages and features of the present invention will become more fully understood from the detailed description given below and the appended drawings, and the following descriptions pertain to the embodiment of the present invention are not intended to limit the present invention, and wherein:

FIG. 1 is a diagram illustrating the mechanical structure of an image forming apparatus;
FIG. 2 is a diagram illustrating an example of an image for correction.

FIG. 3 is a diagram illustrating the relationship between auxiliary lines and correction reference positions;

FIG. 4 is a diagram illustrating a correction process to be performed by a density unevenness correction unit;

FIG. 5 is a flowchart illustrating a density unevenness correction process;

FIG. 6 is a diagram illustrating an example of a machine state screen;

FIG. 7 is a diagram illustrating an example of an adjustment screen;

FIG. 8 is a diagram illustrating an example of a density unevenness correction setting screen;

FIG. 9 is a diagram illustrating an example of a copy setting screen;

FIG. 10 is a flowchart illustrating a process of preparing an image for correction; and

FIG. 11 is a flowchart illustrating a normal mode.

Hereinafter, exemplary embodiments of the invention will be described in detail with reference to the accompanying drawings.

First, a structure will be described.

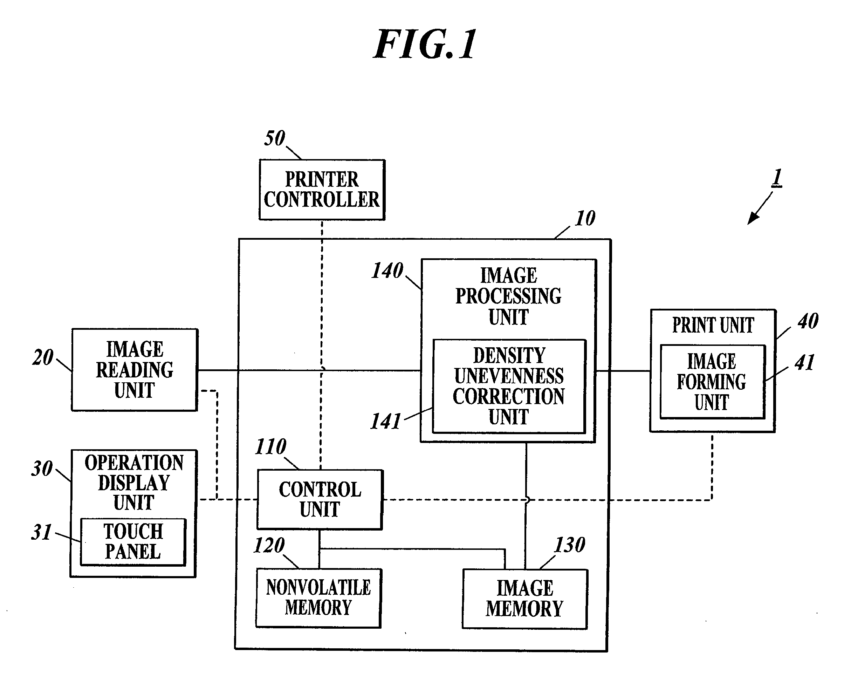

Fig. 1 is a diagram illustrating the mechanical structure of an image forming apparatus 1 according to an embodiment of the invention.

The image forming apparatus 1 according to the embodiment is an apparatus that reads the image of a document and forms the read image on paper, or an apparatus that receives job information including setting information, such as the image forming conditions of image data, or page data including image data from, for example, an external apparatus and forms an image on paper on the basis of the received job information. In addition, the image forming apparatus 1 may be a digital multi-function machine including, for example, a post-processing unit that performs a post-process on paper having an image formed thereon.

As shown in Fig. 1, the image forming apparatus 1 includes, for example, a main body control unit 10, an image reading unit 20, an operation display unit 30, a print unit 40, and a printer controller 50.

The main body control unit 10 includes, for example, a control unit 110, a nonvolatile memory 120, an image memory 130, and an image processing unit 140, and each unit is controlled by the control unit 110.

The control unit 110 includes, for example, a CPU (Central Processing Unit), a ROM (Read Only Memory), and a RAM (Random Access Memory). The control unit 110 reads a designated program or data from a system program, various application programs, and various data stored in the ROM or the nonvolatile memory 120, develops the read program or data in the RAM, and performs various processes in corporation with the program developed in the RAM to control intensively each unit of the image forming apparatus 1.

For example, the control unit 110 switches an operation mode to a copy mode, a printer mode, or a scanner mode to control a copy operation, a printing operation, or the read of image data in response to an instruction signal input from an external apparatus through the operation display unit 30 or the printer controller 50.

The control unit 110 reads a density unevenness correction program according to this embodiment or various necessary data from the ROM or the nonvolatile memory 120, and controls a density unevenness correction process in cooperation with the program and various data.

In this unevenness density correcting processes, an image for correction is generated. The image for correction includes (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction.

Further, an image forming unit 41 forms the image for correction generated by the control unit is formed on a paper to output a correction chart.

An operation display unit 30 accepts an input for a correction value of a pixel density in the correction reference position based on the correction chart.

A density unevenness correction unit 141 corrects each pixel density of an image to be formed based on a result obtained by executing a linear interpolation process for pixel densities between the correction reference positions based on the correction value input by the operation unit.

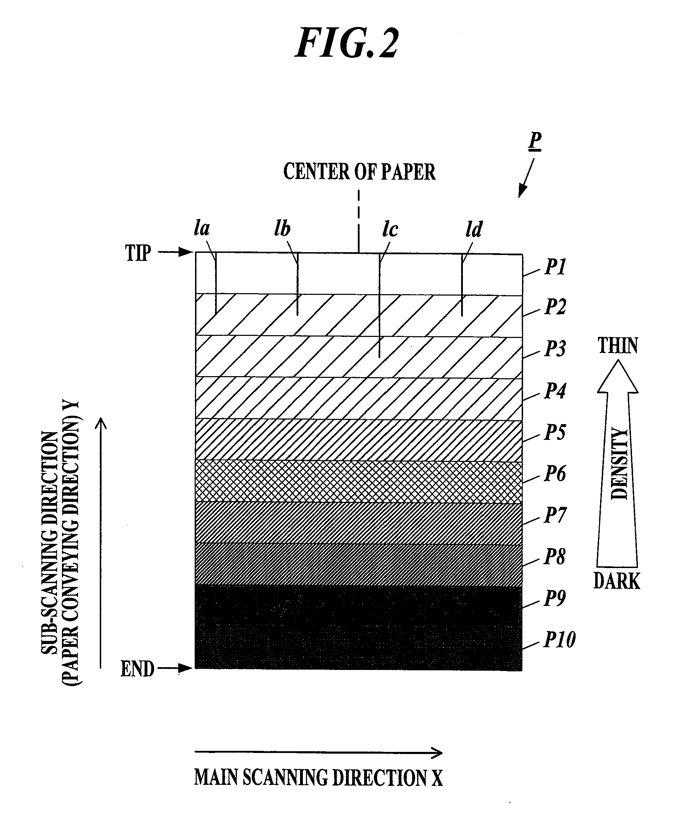

Fig. 2 shows an example of a correction chart in which an image for correction is formed on paper.

As shown in Fig. 2, an image P for correction includes a plurality of beltlike images P to P10 that have predetermined densities and extend in a main scanning direction X and a plurality of auxiliary lines 1a to 1d that are formed on the beltlike images P 1 to P10.

The beltlike images P 1 to P10 that are adjacent to each other in a sub-scanning direction Y have different densities, and are arranged such that their densities are sequentially decreased or increased from the tip to the end of paper in a paper conveying direction (in the sub-scanning direction Y).

The auxiliary lines 1a to 1d are formed in a portion of the image P for correction. The lengths of the auxiliary lines are set such that the length of at least one of the auxiliary lines is different from those of the other auxiliary lines. For example, in Fig. 2, the auxiliary lines 1a, 1b, and 1d extend from the tip of the paper in the paper conveying direction to the beltlike image P2, not the end of the paper, in the sub-scanning direction. The auxiliary line 1c extends from the tip to the beltlike image P3, not the end. It is preferable that one auxiliary line (in this embodiment, the auxiliary line 1c) having a length different from those of the other auxiliary lines be disposed closest to the center of the paper in the main scanning direction X.

In this embodiment, the length of the auxiliary line 1c disposed closest to the center of the paper is larger than those of the other auxiliary lines 1a, 1b, and 1d, but the invention is not limited thereto.

In addition, the densities of the auxiliary lines 1a to 1d are determined depending on the densities of the beltlike images having the auxiliary lines formed thereon. For example, when the densities of the beltlike images P1 and P2 overlapped with the auxiliary line 1a are less than a predetermined density, the density of the auxiliary line 1a is set to be more than the predetermined density. When the density of the beltlike image overlapped with the auxiliary line 1a is more than the predetermined density, the density of the auxiliary line 1a is set to be less than the predetermined density.

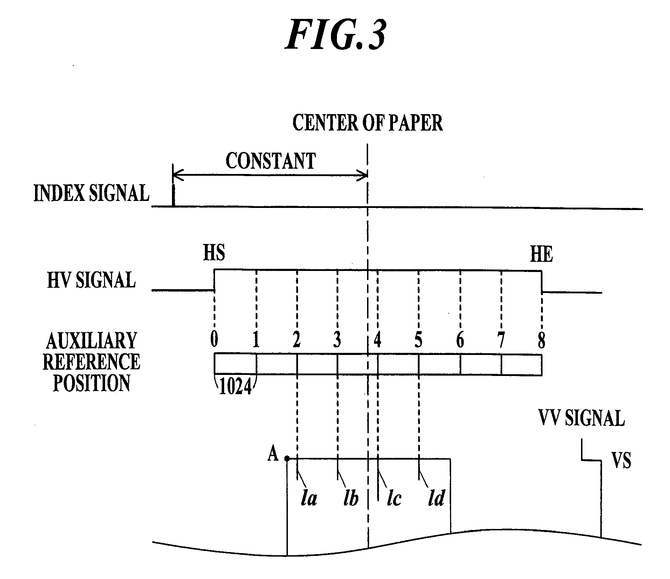

Fig. 3 is a diagram illustrating the relationship between the auxiliary lines and correction reference positions.

A main scanning write reference signal (INDEX signal) is a timing signal generated when laser light emitted from an exposure device in the main scanning direction passes through a sensor provided in the vicinity of a scanning start position in the main scanning direction.

A main scanning valid write signal (HV signal; Horizontal Valid signal) is generated on the basis of the width of a paper size in the main scanning direction. An effective region corresponding to one line in the main scanning direction is from the rising edge (HS) of the HV signal (at a high level) to the falling edge (HE) of the HV signal (at a low level).

A sub-scanning valid write signal (VV signal; Vertical Valid signal) is a signal indicating an effective region in entire image region of image data.

The correction reference positions are obtained by dividing a length corresponding to the period from HS to the HE of the HV signal by a predetermined number of pixels (for example, 1024 pixels). Therefore, it is rare that one of the correction reference positions is aligned with the central position of the paper. However, the time from the rising edge of the INDEX signal to the output of the pixel signal at the center of the paper is constant, and the time from the rising edge of the INDEX signal to HS of the HV signal is also constant. Therefore, the time from HS of the HV signal to the output of the pixel signal at the center of the paper is also constant. As a result, it is possible to calculate the positions of the auxiliary lines corresponding to the auxiliary reference positions formed on the paper on the basis of the HV signal.

For example, when the central position of the paper is 4000 clocks away from the rising edge of the INDEX signal, HS is 100 clocks away from the rising edge of the INDEX signal, HE is 7900 clocks away from the rising edge of the INDEX signal, and a paper size is A4 having a length of 210 mm in the main scanning direction, the write start position A of the paper is calculated at 600 dpi, and an auxiliary reference position closest to the write start position A is calculated as follows.

The number of clocks from the rising edge of the INDEX signal at the write start position A can be calculated by the following equation.

$$\text{Write start position A} = 4000\text{-}(210\text{x}(600/25.4))/2 = 1520$$

The write start position A is 1520 clocks away from the rising edge of the INDEX signal. That is, the write start position A is 1420 clocks away from HS. Since the auxiliary reference positions are disposed at an interval of 1024 clocks from HS, no auxiliary line is formed at the auxiliary reference positions with identification numbers 0 and 1 within the range that is 1420 clocks away from HS, but an auxiliary line is formed at an auxiliary reference position with identification number 2 and is 2028 clocks (1420 + 608 (= 1024x2-1420)) away from HS. In this way, it is possible to calculate the position of an auxiliary line corresponding to each auxiliary reference position on the paper.

The volatile memory 120 stores a density unevenness correction program according to this embodiment, data required for the density unevenness correction program, and data processed by various programs, in addition to various process programs and data required to form an image.

The image memory 130 includes, for example, an HDD (Hard Disk Drive) and a DRAM (Dynamic RAM), and readably and writably stores image data. The image memory 130 stores image data input from the image reading unit 20 or the printer controller 50, and reads image data stored in the image memory 130 and outputs it to the image processing unit 140 under the control of the control unit 110.

The image processing unit 140 performs various image processing operations on the image data input from the image reading unit 20, the printer controller 50, or the image memory 130 and outputs the processed image data to the control unit 110 or the image memory 130. For example, the image processing unit 140 coverts an analog image signal input from the image reading unit 20 into digital image data, it compresses the digital image data and outputs the compressed image data to the image memory 130, or it decompresses the compressed image data and outputs the decompressed image data.

In addition, the image processing unit 140 generates the HV signal, the VV signal, and a clock signal (CLK signal) and outputs the signals to the control unit 110. For example, the CLK signal is generated by a quartz oscillator provided in the image processing unit 140 (a substrate having the image processing unit formed thereon).

The image processing unit 140 further includes a density unevenness correction unit 141.

The density unevenness correction unit 141 serves as a correction unit that performs linear interpolation on each correction reference position on the basis of the correction value of each correction reference position input by the operation display unit 30, and corrects the density of each pixel on the basis of the result of the linear interpolation performed on each correction reference position.

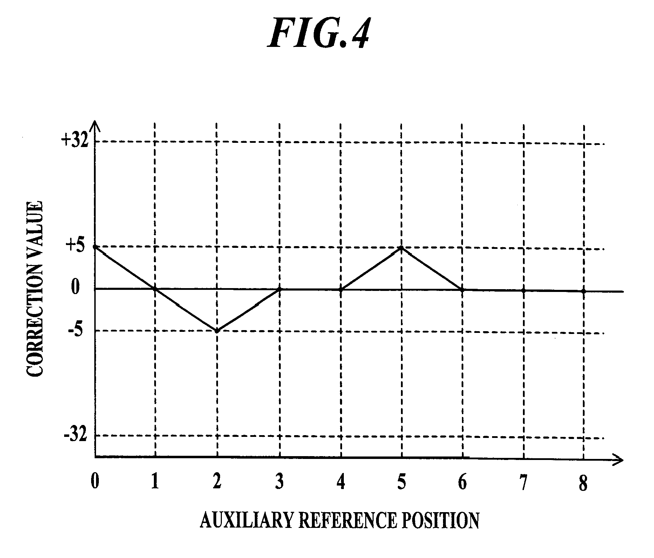

Fig. 4 is a diagram illustrating a correction process to be performed by the density unevenness correction unit 141.

In the graph shown in Fig. 4, the horizontal axis indicates the identification number of each correction reference position (a number for identifying the auxiliary line), and the vertical axis indicates a correction value.

The correction value input by the operation display unit 30 is set to each correction reference position. The linear interpolation is performed between the correction reference positions, and the correction value of each pixel disposed between the correction reference positions is calculated on the basis of the result of the linear interpolation performed between the correction reference positions, for example, an interpolation coefficient. Then, the density of each pixel is corrected on the basis of the correction value of each pixel.

For example, the correction value of each of 1024 pixels between the correction reference position with identification number 2 and the correction reference position with identification number 3 is calculated on the basis of the interpolation coefficient of linear interpolation based on the correction value (-5) of the correction reference position with identification number 2 and the correction value (0) of the correction reference position with identification number 3 and then the calculated correction value is set.

The image reading unit 20 includes, for example, a CCD, an image read control unit, an automatic document feeder (ADF), and a reading unit. The image read control unit controls, for example, the automatic document feeder and the reading unit on the basis of instructions from the control unit 110, which will be described below, to read the images of a plurality of documents. A read analog image signal is output to the image processing unit 140. In this embodiment, the image is not limited to image data of, for example, a figure or a photograph, but also includes text data, such as characters or symbols.

The image data (analog image signal) read by the image reading unit 20 is output to the image processing unit 140, and the image processing unit 140 converts the analog image data into digital image data, performs various image processing operations on the digital image data, and outputs the processed image data to the print unit 40.

The operation display unit 30 includes, for example, an LCD (Liquid Crystal Display), a touch panel 31 that is provided so as to cover the LCD, an operation display control unit, and operation keys (not shown).

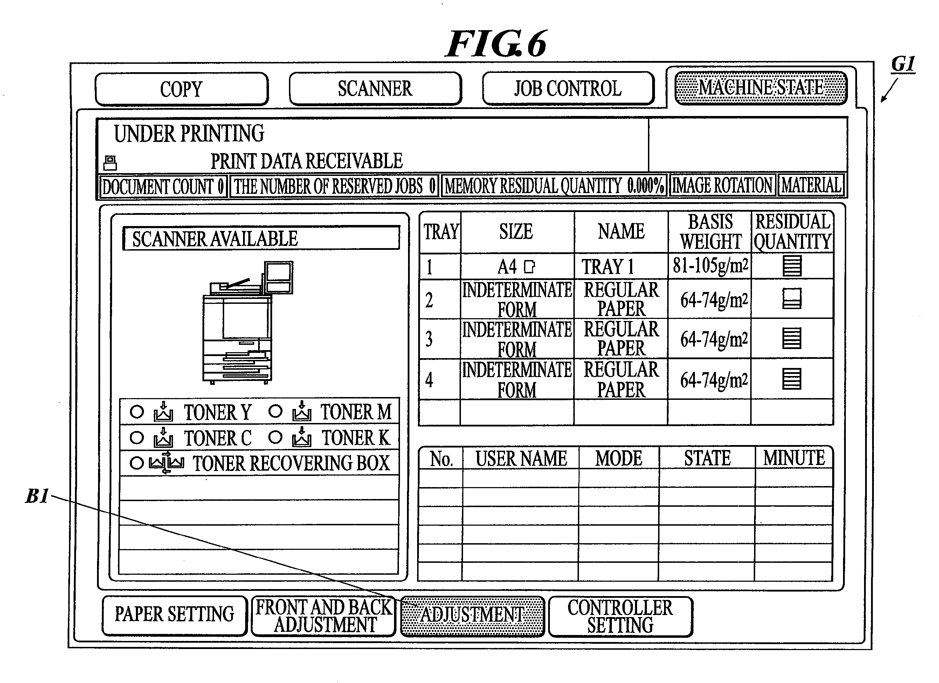

In the operation display unit 30, the operation display control unit displays various setting screens for inputting various setting conditions, for example, various screens shown in Figs. 6 to 9, or various processed results on the LCD, according to display signals input from the control unit 110. In addition, the operation display unit 30 outputs operation signals input from an operation key group or the touch panel 31 to the control unit 110.

The print unit 40 performs an electrophotographic image forming process on the basis of input print data, and includes units related to printout, such as a paper feed unit, a paper conveying unit, an image forming unit 41, and a discharge unit, and a print control unit.

The paper feed unit includes a plurality of paper feed trays. Various types of paper are accommodated in the paper feed trays, and the paper at an upper side is conveyed one by one to the paper conveying unit.

The paper conveying unit conveys the paper fed from the paper feed tray to a transfer device of the image forming unit 41 through, for example, a plurality of intermediate rollers and a registration roller.

The image forming unit 41 includes a photoconductor drum, a charging device, an exposure device having a laser light output unit that outputs laser light on the basis of image data and a polygon mirror that performs scanning with the laser light in the main scanning direction, a developing device, a transfer device, a cleaning unit, and a fixing device. The print control unit controls each component of the print unit 40, such as the image forming unit 41, in response to instructions from the control unit 110, and the image forming unit 41 forms an image on paper on the basis of data input from the image processing unit 140.

Specifically, the exposure device radiates laser light onto the photoconductor drum charged by the charging device to form an electrostatic latent image, and the developing device attaches charged toner to the surface of the photoconductor drum having the electrostatic latent image formed thereon to develop the electrostatic latent image. Then, the transfer device transfers the toner image formed on the photoconductor drum onto the paper. After the toner image is transferred onto the paper, the cleaning unit removes toner remaining on the surface of the photoconductor drum. The fixing device thermally fixes the toner image transferred onto the paper, and the paper having the toner image thermally fixed thereto is pinched by the discharge rollers and then discharged from an outlet.

When the image forming apparatus 1 is used as a network printer, the printer controller 50 outputs data transmitted from an external apparatus, such as a PC (Personal Computer), connected to, for example, a LAN (Local Area Network) to the image forming apparatus 1.

Next, the operation of the embodiment will be described.

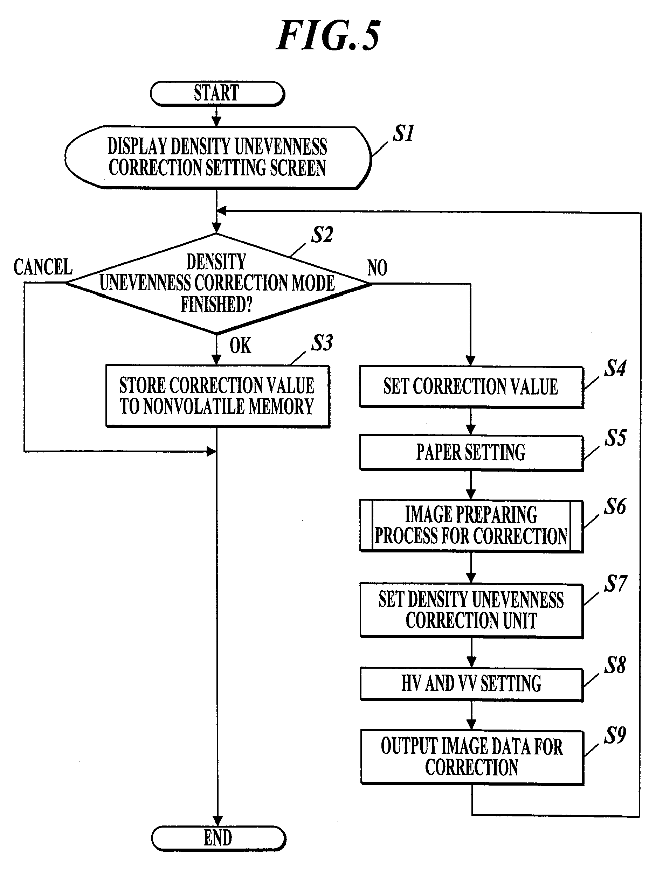

Fig. 5 is a flowchart illustrating the density unevenness correction process according to the embodiment. All the components of the control unit 110 perform the density unevenness correction process in cooperation with each other.

First, the control unit 110 controls the operation display unit 30 to display the machine state of the image forming apparatus 1 on the machine state screen in response to instructions input from the operation display unit 30.

Fig. 6 is a diagram illustrating an example of a machine state screen G1.

As shown in Fig. 6, the state of toner or the state of paper accommodated in each of the paper feed trays is displayed on the machine state screen G1. In addition, an adjustment button B1 for displaying an adjustment screen that allows the user to adjust all the units of the image forming apparatus 1 is provided on the machine state screen G1.

When the adjustment button B1 is pressed, the control unit 110 controls the operation display unit 30 to display the adjustment screen.

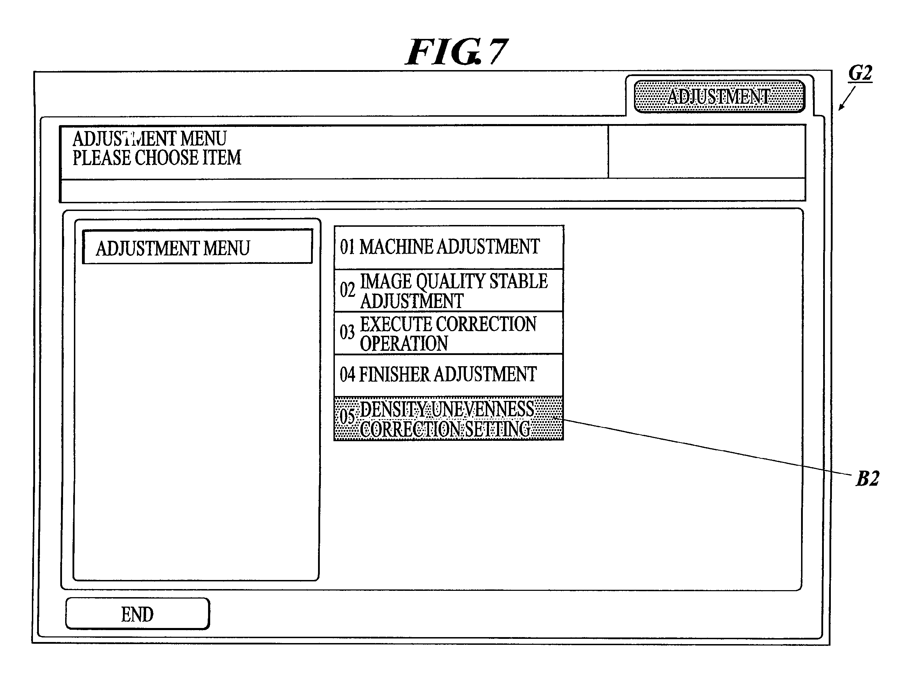

Fig. 7 is a diagram illustrating an example of an adjustment screen G2.

As shown in Fig. 7, a density unevenness correction setting button B2 for displaying a density unevenness correction setting screen and buttons for displaying the other setting screens are provided on the adjustment screen G2.

When the density unevenness correction setting button B2 is pressed, the control unit 110 controls the operation display unit 30 to display the density unevenness correction setting screen, thereby starting a density unevenness correction mode (Step S1).

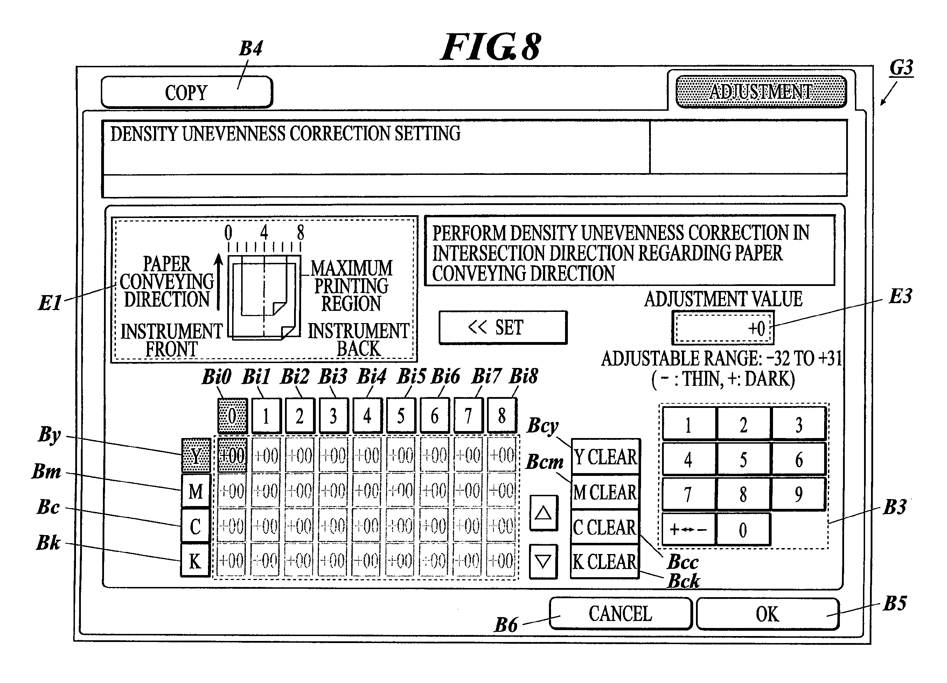

Fig. 8 is a diagram illustrating an example of a density unevenness correction setting screen G3.

As shown in Fig. 8, the density unevenness correction setting screen G3 has a paper image region E1, auxiliary reference position buttons Bi0 to Bi8, toner color buttons By, Bm, Bc, and Bk, clear buttons Bcy, Bcm, Bcc, and Bck, a correction value display region E2, a numeric keypad B3 including symbols + and -, a display region E3, a copy button B4, an OK button B5, and a cancel button B6 provided thereon.

An image indicating the position of paper during a density unevenness correction setting process is displayed in the paper image region E1. The auxiliary reference position buttons Bi0 to Bi8 are used to select each correction reference position. The toner color buttons By, Bm, Bc, and Bk are used to select toner colors. The clear buttons Bcy, Bcm, Bcc, and Bck are used to initialize the correction value of each toner color. Correction values corresponding to each toner color button and each auxiliary reference position button are displayed in the correction value display region E2. The correction value indicated by the numeric keypad B3 is displayed in the display region E3. The copy button B4 is pressed to display a copy setting screen.

The control unit 110 determines whether the density unevenness correction mode is finished (Step S2). It is determined in Step S2 that the density unevenness correction mode is finished in the following two cases: when the cancel button B6 is pressed; and when the OK button B5 is pressed. When the cancel button B6 is pressed (Step S2; cancel), the control unit 110 ends the process. When the OK button B5 is pressed (Step S2; OK), the control unit 110 stores the correction value displayed in the correction value display region E2 in the nonvolatile memory 120 (Step S3), and ends the process.

When it is determined that the density unevenness correction mode is not finished and buttons other than the OK button B5 and the cancel button B6 on the density unevenness correction setting screen G3 are pressed (Step S2; No), the control unit 110 receives an instruction to set the correction value (Step S4).

In Step S4, the user presses and selects one of the toner color buttons By, Bm, Bc, and Bk and one of the auxiliary reference position buttons Bi0 to Bi8, and inputs a correction value corresponding to the toner color and the auxiliary reference position indicated by the two selected buttons using the numeric keypad B3, thereby setting the correction value.

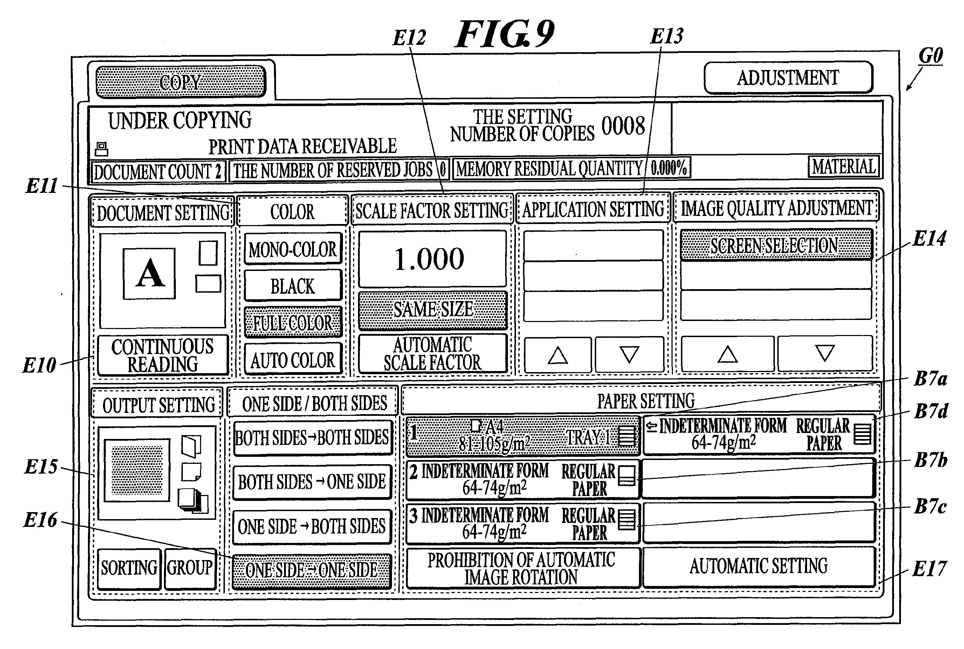

After Step S4, when the copy button B4 is pressed, the control unit 110 displays the copy setting screen. Fig. 9 is a diagram illustrating an example of a copy setting screen G0.

As shown in Fig. 9, the copy setting screen G0 has a document setting region E10, a color setting region E11, a scale factor setting region E12, an application setting region E13, an image quality adjustment region E14, an output setting region E15, a single-side/both-side setting region E16, and a paper setting region E17 provided thereon. The copy setting screen G0 is for setting various output modes of a formed image or for setting various conditions of paper having an image formed thereon. The output mode is an output operation related to an output color (for example, black and colors), a scale factor, a single-sided output or a both-sided output. In addition, paper feed tray buttons B7a to B7d used for the user to select a paper feed tray in which paper to be fed is accommodated are displayed in the paper setting region E17.

The control unit 110 receives a paper setting instruction from the user through the copy setting screen G0 (Step S5). In Step S5, the user presses any one of the paper feed tray buttons B7a to B7d in the paper setting region E17 to set the paper accommodated in the paper feed tray corresponding to the pressed paper feed tray button.

After setting the correction value and the paper, the control unit 110 performs a process of preparing an image for correction (Step S6), and sets the density unevenness correction unit 141 (Step S7).

In Step S7 of setting the density unevenness correction unit 141, for example, the control unit performs linear interpolation between the correction reference positions on the basis of the correction value of each correction reference position set in Step S4, and calculates the density value of each pixel on the basis of the result of the linear interpolation.

After Step S7, the control unit 110 sets the HV signal and the VV signal (Step S8), and outputs image data for correction to the print unit 40 (Step S9). The print unit 40 prints an image for correction on the set paper on the basis of the image data for correction input from the control unit 110 and outputs a correction chart. When the correction chart is output, the process of the control unit 110 returns to Step S2.

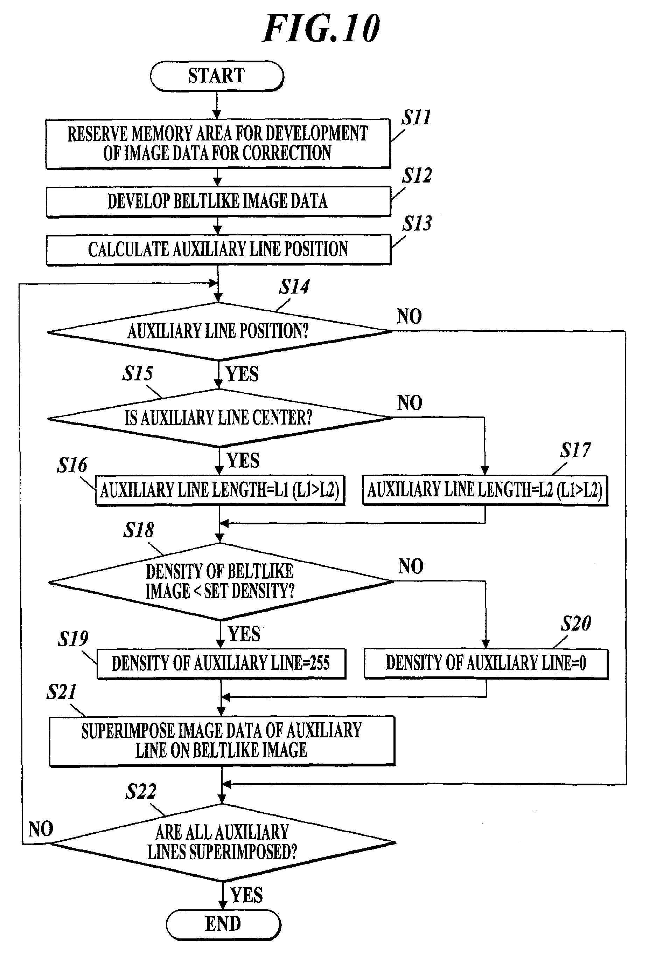

Fig. 10 is a flowchart illustrating the process of preparing the image for correction performed in Step S6. All the components of the control unit 110 perform the process in cooperation with each other.

The control unit 110 ensures a memory area for developing data of the image for correction (image data for correction) in the RAM, the nonvolatile memory 120, or the image memory 130 according to the size of the set paper (Step S11). Then, the control unit 110 develops data of the beltlike image (beltlike image data) formed in an image formable region corresponding to the size of the paper in the ensured memory area (Step S 12).

The control unit 110 calculates the positions of the auxiliary lines formed on the set paper on the basis of the size of the paper and the auxiliary reference positions (Step S13).

The control unit 110 sequentially determines whether the position of each pixel is aligned with the position of the auxiliary line from one end to the other end of the image formable region in the main scanning direction (Step S 14). When it is determined that the position of the pixel is not aligned with the position of the auxiliary line (Step S 14; No), the process proceeds to Step S22.

When it is determined that the position of the pixel is aligned with the position of the auxiliary line (Step S 14; Yes), the control unit 110 determines whether the pixel is disposed closest to the center of the paper, that is, whether the auxiliary line is disposed closest to the center of the paper (Step S15). Alternatively, in Step S15, a number for identifying the auxiliary line closest to the center of the paper may be set in advance, and the control unit may determine whether the identification number of the auxiliary line is identical to a predetermined number.

When it is determined that the auxiliary line is disposed closest to the center of the paper (Step S 15; Yes), the control unit 110 sets the length of the auxiliary line to a predetermined first length L1 (Step S16).

When it is determined that the auxiliary line is not disposed closest to the center of the paper (Step S15; No), the control unit 110 sets the length of the auxiliary line to a predetermined second length L2 that is smaller than the first length L (Step S17).

After Step S16 or Step S 17, the control unit 110 determines whether the highest density of the beltlike image overlapped with the position of the pixel in the main scanning direction, that is, the auxiliary line is less than a predetermined set density (for example, 128) (Step S 18).

When it is determined that the highest density of the beltlike image overlapped with the auxiliary line is less than the set density (Step S 18; Yes), the control unit 110 sets the density of the auxiliary line to a predetermined value (for example, 255) that is greater than the set density (Step S 19).

When it is determined that the highest density of the beltlike image overlapped with the auxiliary line is more than the set density (Step S 18; No), the control unit 110 sets the density of the auxiliary line to a predetermined value (for example, 0) that is less than the set density (Step S20).

After Step S 19 or Step S20, the control unit 110 overlaps data of the auxiliary line whose length and density are set with beltlike image data (Step S21), and determines whether all the auxiliary lines that can be formed in the image forming region are completely overlapped (Step S22). When it is determined that the overlap of all the auxiliary lines is not completed (Step S22; No), the process returns to Step S14. On the other hand, when it is determined that the overlap of all the auxiliary lines is completed (Step S22; Yes), the process ends.

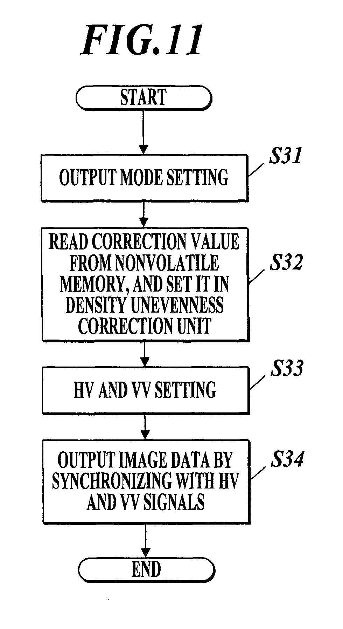

Fig. 11 is a flowchart illustrating an image forming process after the density unevenness correction process ends (normal mode). All the components of the control unit 110 perform the process in cooperation with each other.

The control unit 110 sets various output modes of a formed image or various conditions of paper having an image formed thereon on the copy setting screen G0 (Step S31).

When a copy start button of a hard key of the operation display unit 30 is pressed, the control unit 110 reads a correction value from the nonvolatile memory 120, and outputs the correction value to the density unevenness correction unit 141 (Step S32).

After Step S32, the control unit 110 sets the HV signal and the VV signal (Step S33), and outputs designated image data in the image memory 130 to the print unit 40 (Step S34). Then, the process ends. The print unit 40 forms an image on the set paper on the basis of the image data input from the control unit 110.

As described above, according to the embodiment, it is possible to check each correction reference position, and the user can input a correction value for each correction reference position. In addition, it is possible to obtain uniform density in the main scanning direction according to user preference.

In particular, since the auxiliary lines are formed in a portion of the image for correction, it is possible to reduce an adverse effect on the determination of the density of the beltlike image in the main scanning direction due to the auxiliary line, such as a variation in the density of the beltlike image due to a variation in the amount of toner in the vicinity of the auxiliary line or a visible influence of the auxiliary line extending from one end to the other end of paper in the sub-scanning direction.

In addition, the lengths of the auxiliary lines are set such that the length of at least one of the auxiliary lines is different from those of the other auxiliary lines. For example, among a plurality of auxiliary lines, the length of one auxiliary line that is disposed closest to the center of the paper in the main scanning direction is larger than those of the other auxiliary lines. Therefore, it is possible to check the center of the paper in the main scanning direction, and it is possible to check each of the correction reference positions (auxiliary lines) from the center of the paper. In this way, it is possible to check the relationship between a plurality of correction reference positions without forming a number or a symbol on the paper.

Furthermore, the density of each auxiliary line is determined depending on the density of the beltlike image on which the auxiliary line is formed. For example, when the density of the beltlike image is less than 128, the auxiliary line is formed with a density of 255. When the density of the beltlike image is equal to or more than 128, no auxiliary line is formed, that is, the auxiliary line can be colored white. In this way, it is possible to easily check the position of the auxiliary line.

A plurality of beltlike images is provided and the beltlike images have different densities. Therefore, it is possible to provide a correction chart capable of easily checking density unevenness in the main scanning direction.

In the above-described embodiment, the ROM or the nonvolatile memory is used as a computer readable medium having the program according to the invention, but the invention is not limited thereto. For example, a nonvolatile memory, such as a flash memory, and a portable recording medium, such as a CD-ROM, may be used as the computer readable medium. In addition, a carrier wave may be used as a medium that provides program data according to the invention through a communication line.

The invention is not limited to the above-described embodiment, but various modifications and changes of the invention can be made without departing from the scope and spirit of the invention.

It is, therefore, a first object of the present invention to provide an image forming apparatus, comprising:

a control unit for causing an image for correction to be generated, the image including (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction;

an image forming unit for forming the image for correction generated by the control unit on a paper to output a correction chart;

an operation unit for accepting an input for a correction value of a pixel density in the correction reference position based on the correction chart; and

a correction unit for correcting each pixel density of an image to be formed based on a result obtained by executing a linear interpolation process for pixel densities between the correction reference positions based on the correction value input by the operation unit.

It is, therefore, a second object of the present invention to provide a density correction method for correcting density unevenness in a main scanning direction in an image forming apparatus, comprising:

a control step for causing an image for correction to be generated, the image including (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction;

an image forming step for forming the image for correction generated in the control step on a paper to output a correction chart;

an operation step for accepting an input for a correction value of a pixel density in the correction reference position based on the correction chart; and

a correction step for correcting each pixel density of an image to be formed based on a result obtained by executing a linear interpolation process for pixel densities between the correction reference positions based on the correction value input in the operation step.

According to the first and second aspect of the present invention, it is possible to check each correction reference position, and the user can input a correction value for each correction reference position. In addition, it is possible to obtain uniform density in the main scanning direction according to user preference.

Preferably, in accordance with a third aspect of the present invention, the control unit causes the auxiliary line to be formed on a portion of the image for correction.

Further, according to the third aspect of the present invention, it is possible to reduce an adverse effect on the determination of the density of the beltlike image in the main scanning direction due to the auxiliary line, such as a variation in the density of the beltlike image due to a variation in the amount of toner in the vicinity of the auxiliary line or a visible influence of the auxiliary line extending from one end to the other end of paper in the sub-scanning direction.

Preferably, in accordance with a fourth aspect of the present invention, the control unit determines a density of the auxiliary line according to a density of the beltlike image to which the auxiliary line is formed.

Further, according to the fourth aspect of the present invention, it is possible to easily check the position of the auxiliary line.

Preferably, in accordance with a fifth aspect of the present invention, a length of one of the auxiliary lines is different from a length of another one of the auxiliary lines.

Further, according to the fifth aspect of the present invention, it is possible to check the relationship between a plurality of correction reference positions without forming a number or a symbol on the paper.

Preferably, in accordance with a sixth aspect of the present invention, the image for correction includes a plurality of beltlike images each having different density with each other.

Further, according to the sixth aspect of the present invention, it is possible to provide a correction chart capable of easily checking density unevenness in the main scanning direction.

**Claims**

1. An image forming apparatus, comprising:

   a control unit for causing an image for correction to be generated, the image including (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction;
   an image forming unit for forming the image for correction generated by the control unit on a paper to output a correction chart;
   an operation unit for accepting an input for a correction value of a pixel density in the correction reference position based on the correction chart; and
   a correction unit for correcting each pixel density of an image to be formed based on a result obtained by executing a linear interpolation process for pixel densities between the correction reference positions based on the correction value input by the operation unit.

2. The image forming apparatus according to claim 1, wherein the control unit causes the auxiliary line to be formed on a portion of the image for correction.

3. The image forming apparatus according to claim 1 or 2, wherein the control unit determines a density of the auxiliary line according to a density of the beltlike image to which the auxiliary line is formed.

4. The image forming apparatus according to any one of claims 1-3, wherein a length of one of the auxiliary lines is different from a length of another one of the auxiliary lines.

5. The image forming apparatus according to any one of claims 1-4, wherein the image for correction includes a plurality of beltlike images each having different density with each other.

6. A density correction method for correcting density unevenness in a main scanning direction in an image forming apparatus, comprising:

   a control step for causing an image for correction to be generated, the image including (i) a beltlike image having a predetermined density and extending in a main scanning direction and (ii) auxiliary lines arranged in different correction reference positions on the beltlike image set for a predetermined number of pixels in the main scanning direction, and each auxiliary line extending in a sub-scanning direction;
   an image forming step for forming the image for correction generated in the control step on a paper to output a correction chart;
   an operation step for accepting an input for a correction value of a pixel density in the correction reference position based on the correction chart; and
   a correction step for correcting each pixel density of an image to be formed based on a result obtained by executing a linear interpolation process for pixel densities between the correction reference positions based on the correction value input in the operation step.

7. The density correction method according to claim 6, wherein the control step causes the auxiliary line to be formed on a portion of the image for correction.

8. The density correction method according to claim 6 or 7, wherein the control step determines a density of the auxiliary line according to a density of the beltlike image to which the auxiliary line is formed.

9. The density correction method according to any one of claims 6-8, wherein a length of one of the auxiliary lines is different from a length of another one of the auxiliary lines.

10. The density correction method according to any one of claims 6-9, wherein the image for correction includes a plurality of beltlike images each having different density with each other.

# FIG.1

EP 2 129 101 A2

# FIG.2

# FIG.3

CENTER OF PAPER

INDEX SIGNAL

CONSTANT

HS · · · HE

HV SIGNAL

AUXILIARY
REFERENCE
POSITION

0  1  2  3  4  5  6  7  8

1024

A

la  lb  lc  ld

VV SIGNAL

VS

# FIG.4

# FIG.5

START

DISPLAY DENSITY UNEVENNESS
CORRECTION SETTING SCREEN — *S1*

DENSITY
UNEVENNESS CORRECTION MODE
FINISHED? — *S2*

CANCEL

NO

OK — *S3*

STORE CORRECTION VALUE
TO NONVOLATILE MEMORY

SET CORRECTION VALUE — *S4*

PAPER SETTING — *S5*

IMAGE PREPARING
PROCESS FOR CORRECTION — *S6*

SET DENSITY UNEVENNESS
CORRECTION UNIT — *S7*

HV AND VV SETTING — *S8*

OUTPUT IMAGE DATA FOR
CORRECTION — *S9*

END

## FIG.6

*G1*

| COPY | SCANNER | JOB CONTROL | MACHINE STATE |

**UNDER PRINTING**

PRINT DATA RECEIVABLE

| DOCUMENT COUNT 0 | THE NUMBER OF RESERVED JOBS 0 | MEMORY RESIDUAL QUANTITY 0.000% | IMAGE ROTATION | MATERIAL |

**SCANNER AVAILABLE**

○ TONER Y ○ TONER M
○ TONER C ○ TONER K
○ TONER RECOVERING BOX

| TRAY | SIZE | NAME | BASIS WEIGHT | RESIDUAL QUANTITY |
|---|---|---|---|---|
| 1 | A4 | TRAY 1 | 81-105g/m² | |
| 2 | INDETERMINATE FORM | REGULAR PAPER | 64-74g/m² | |
| 3 | INDETERMINATE FORM | REGULAR PAPER | 64-74g/m² | |
| 4 | INDETERMINATE FORM | REGULAR PAPER | 64-74g/m² | |
| | | | | |

| No. | USER NAME | MODE | STATE | MINUTE |
|---|---|---|---|---|
| | | | | |
| | | | | |
| | | | | |
| | | | | |
| | | | | |

*B1*

| PAPER SETTING | FRONT AND BACK ADJUSTMENT | ADJUSTMENT | CONTROLLER SETTING |

EP 2 129 101 A2

*FIG.7*

G2

ADJUSTMENT

ADJUSTMENT MENU
PLEASE CHOOSE ITEM

ADJUSTMENT MENU

01 MACHINE ADJUSTMENT

02 IMAGE QUALITY STABLE
   ADJUSTMENT

03 EXECUTE CORRECTION
   OPERATION

04 FINISHER ADJUSTMENT

05 DENSITY UNEVENNESS
   CORRECTION SETTING

B2

END

EP 2 129 101 A2

# FIG.8

**B4** — COPY    ADJUSTMENT    **G3**

DENSITY UNEVENNESS CORRECTION SETTING

PAPER CONVEYING DIRECTION

MAXIMUM PRINTING REGION

INSTRUMENT FRONT    INSTRUMENT BACK

0    4    8

**E1**

PERFORM DENSITY UNEVENNESS CORRECTION IN INTERSECTION DIRECTION REGARDING PAPER CONVEYING DIRECTION

ADJUSTMENT VALUE    **E3**

+0

ADJUSTABLE RANGE: −32 TO +31
(− : THIN, +: DARK)

<< SET

**Bi0 Bi1 Bi2 Bi3 Bi4 Bi5 Bi6 Bi7 Bi8**

| 0 | 1 | 2 | 3 | 4 | 5 | 6 | 7 | 8 |

**By** — Y
**Bm** — M
**Bc** — C
**Bk** — K

| Y | +00 | +00 | +00 | +00 | +00 | +00 | +00 | +00 | +00 |
| M | +00 | +00 | +00 | +00 | +00 | +00 | +00 | +00 | +00 |
| C | +00 | +00 | +00 | +00 | +00 | +00 | +00 | +00 | +00 |
| K | +00 | +00 | +00 | +00 | +00 | +00 | +00 | +00 | +00 |

**Bcy** — Y CLEAR
**Bcm** — M CLEAR
C CLEAR — **Bcc**
K CLEAR — **Bck**

| 1 | 2 | 3 |
| 4 | 5 | 6 |
| 7 | 8 | 9 |
| +↔− | 0 | |

**B3**

CANCEL    OK    **B5**

**B6**

EP 2 129 101 A2

# FIG.9

**COPY**     **ADJUSTMENT**

UNDER COPYING    THE SETTING NUMBER OF COPIES 0008

PRINT DATA RECEIVABLE

DOCUMENT COUNT 2 | THE NUMBER OF RESERVED JOBS 0 | MEMORY RESIDUAL QUANTITY 0.000% | MATERIAL

| DOCUMENT SETTING | COLOR | SCALE FACTOR SETTING | APPLICATION SETTING | IMAGE QUALITY ADJUSTMENT |

**A**

MONO-COLOR

BLACK

FULL COLOR

AUTO COLOR

CONTINUOUS READING

1.000

SAME SIZE

AUTOMATIC SCALE FACTOR

SCREEN SELECTION

△ ▽    △ ▽

OUTPUT SETTING | ONE SIDE / BOTH SIDES | PAPER SETTING

BOTH SIDES → BOTH SIDES

BOTH SIDES → ONE SIDE

ONE SIDE → BOTH SIDES

SORTING | GROUP | ONE SIDE → ONE SIDE

1   A4   81-105g/m²   TRAY 1

2 INDETERMINATE FORM   REGULAR PAPER   64-74g/m²

3 INDETERMINATE FORM   REGULAR PAPER   64-74g/m²

PROHIBITION OF AUTOMATIC IMAGE ROTATION

INDETERMINATE FORM   REGULAR PAPER   64-74g/m²

AUTOMATIC SETTING

*E12*   *E13*   *G0*   *E11*   *E10*   *E14*   *E15*   *E16*   *B7a*   *B7d*   *B7b*   *B7c*   *E17*

EP 2 129 101 A2

# FIG.10

```
              ┌─────────────┐
              │    START    │
              └──────┬──────┘
                     ▼
    ┌───────────────────────────────────────┐  S11
    │  RESERVE MEMORY AREA FOR DEVELOPMENT   │
    │     OF IMAGE DATA FOR CORRECTION       │
    └───────────────────┬───────────────────┘
                        ▼                       S12
    ┌───────────────────────────────────────┐
    │       DEVELOP BELTLIKE IMAGE DATA      │
    └───────────────────┬───────────────────┘
                        ▼                       S13
    ┌───────────────────────────────────────┐
    │    CALCULATE AUXILIARY LINE POSITION   │
    └───────────────────┬───────────────────┘
                        ▼
```

S14 — AUXILIARY LINE POSITION? — NO

S15 (YES) — IS AUXILIARY LINE CENTER? — NO

S16 (YES) — AUXILIARY LINE LENGTH=L1 (L1>L2)

S17 — AUXILIARY LINE LENGTH=L2 (L1>L2)

S18 — DENSITY OF BELTLIKE IMAGE < SET DENSITY? — NO

S19 (YES) — DENSITY OF AUXILIARY LINE=255

S20 — DENSITY OF AUXILIARY LINE=0

S21 — SUPERIMPOSE IMAGE DATA OF AUXILIARY LINE ON BELTLIKE IMAGE

S22 — ARE ALL AUXILIARY LINES SUPERIMPOSED? — NO / YES

```
              ┌─────────────┐
              │     END     │
              └─────────────┘
```

# FIG.11

```
        ┌─────────────────┐
        (      START       )
        └─────────────────┘
                 │
                 ▼
    ┌──────────────────────────┐   S31
    │   OUTPUT MODE SETTING     │
    └──────────────────────────┘
                 │
                 ▼
    ┌──────────────────────────┐
    │  READ CORRECTION VALUE    │
    │   FROM NONVOLATILE        │   S32
    │  MEMORY, AND SET IT IN    │
    │  DENSITY UNEVENNESS       │
    │    CORRECTION UNIT        │
    └──────────────────────────┘
                 │
                 ▼
    ┌──────────────────────────┐   S33
    │    HV AND VV SETTING      │
    └──────────────────────────┘
                 │
                 ▼
    ┌──────────────────────────┐
    │  OUTPUT IMAGE DATA BY     │   S34
    │ SYNCHRONIZING WITH HV     │
    │    AND VV SIGNALS         │
    └──────────────────────────┘
                 │
                 ▼
        ┌─────────────────┐
        (       END        )
        └─────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005024733 A